# EUROPEAN PATENT SPECIFICATION

(11) **EP 2 234 363 B1**
(45) Date of publication and mention of the grant of the patent: **20.02.2019**
(21) Application number: 08871457.1
(22) Date of filing: 24.12.2008
(51) Int. Cl.: H04L 29/06, H04L 29/02

(54) **A METHOD AND DEVICE FOR PROVIDING SUPPORT FOR TRANSMITTING A MEDIA STREAM EMBEDDED IN THE CONTROL STREAM**
VERFAHREN UND VORRICHTUNG ZUR UNTERSTÜTZUNG DER ÜBERTRAGUNG EINES IN DEN STEUERUNGSSTROM EINGEBETTETEN MEDIENSTROMS
PROCÉDÉ ET DISPOSITIF POUR ASSURER LA PRISE EN CHARGE D'UNE TRANSMISSION DE FLUX MULTIMÉDIA INCORPORÉ DANS UN FLUX DE COMMANDE

(30) Priority: 29.12.2007 CN 200710307878
(43) Date of publication of application: 29.09.2010
(73) Proprietor: Huawei Technologies Co., Ltd., Longgang District Shenzhen, Guangdong 518129 (CN)
(72) Inventor: LIN, Yangbo, Guangdong 518129 (CN)
(74) Representative: Pfenning, Meinig & Partner mbB
(86) International application number: PCT/CN2008/073687
(87) International publication number: WO 2009/092264

(56) References cited:
- CN-A- 1 988 687
- CN-A- 1 996 968
- CN-A- 1 997 010
- KR-B1- 100 727 079
- US-A1- 2002 143 532
- "Gateway control protocol: Advanced media server packages; H.248.9 (2005) Amendment 1 (08/07)", ITU-T STANDARD, INTERNATIONAL TELECOMMUNICATION UNION, GENEVA ; CH, no. H.248.9 (2005) Amendment 1 (08/07), 29 August 2007 (2007-08-29), pages 1-42, XP017435647, [retrieved on 2008-03-27]
- "Gateway control protocol: Version 3; H.248.1 (09/05)", ITU-T DRAFT STUDY PERIOD 2005-2008, INTERNATIONAL TELECOMMUNICATION UNION, GENEVA ; CH, no. H.248.1 (09/05), 13 September 2005 (2005-09-13), XP017404788,

## Description

### Field of the Invention

The present invention relates to communications technologies, and in particular, to a method and device for transmission of a media stream embedded in a control stream.

### Background of the Invention

In an existing packet network, the media gateway controller (MGC) and media gateway (MG) are two key components under a service and bearer separated architecture. The MGC is responsible for service control function and the MG is responsible for media bearing function so that the service control plane is separated from the media bearer plane. Thus, network resources are fully shared, equipment upgrade and service expansion are simplified, and the costs of development and maintenance are lower.

A (media) gateway control protocol is adopted for communication between the MG and the MGC, and includes the widely used H.248/MeGaCo and MGCP at present, where H.248/MeGaCo is based on MGCP. MGCP version 1 was prepared by the Internet Engineering Task Force (IETF) in October 1999 and revised in January 2003. H.248/MeGaCo version 1 was prepared jointly by the International Telecommunication Union (ITU) and the IETF in November 2000 and revised in June 2003. H.248 version 2 was prepared by the ITU in May 2002 and revised in March 2004. H.248 version 3 was prepared by the ITU in September 2005.

Under H.248, for example, the following abstract connection model exists: resources on the MG are abstracted as terminations; the terminations include physical terminations and ephemeral terminations; the physical terminations represent physical entities with semi-permanent existence, such as time division multiplexing (TDM) timeslots, and the ephemeral terminations represent public resources requested ephemerally and released after use, such as Real-time Transport Protocol (RTP) streams. A special termination called Root termination is used to represent the MG entirety. Associations between terminations are abstracted as contexts. A context may represent the associations between multiple terminations and the relations between the terminations are described by a topology. Terminations that are not associated with other terminations are included in a special context called Null.

Based on the above abstract connection model, interactions between services and bearers are in fact operations on terminations and contexts. Such operations are completed via the request and reply of commands between the MGC and the MG. The commands include Add, Modify, Subtract, Move, AuditValue, AuditCapabilities, Notify, and ServiceChange. The commands include command parameters, also called descriptors which are classified into Property, Signal, Event and Statistic. For convenience, parameters with service relevance are logically aggregated as a package.

The control of an MG by the MGC may be specific to a termination or a stream on the termination. Features that are not stream-specific on a termination are described by TerminationState descriptors, such as ServiceState and EventBufferControl. Stream-specific features on a termination are described by Media descriptors that include a series of stream descriptors. Each stream descriptor is specific to one stream and includes LocalControl, Local and Remote. The LocalControl descriptor carries stream related control information, such as Mode, ReserveGroup, and ReserveValue. The Local and Remote descriptors carry features of streams received at the local and remote ends, such as the address, port and codec algorithm, in the form of the Session Description Protocol (SDP).

In the existing technology, a media stream is generally transmitted separately from its control stream. For example, a media stream is transmitted between MGs by RTP and the control stream of the media stream is transmitted between the MGC and MG by H.248.

In the existing technology, a media stream is generally transmitted separately from its control stream. For example, a media stream is transmitted between MGs by RTP and the control stream of the media stream is transmitted between the MGC and MG by H.248.

There are, however, some particular applications where a media stream needs to be transmitted over the transmission channel of a control stream, which means the media stream is embedded in the control stream in transmission. Embedding the media stream in the control stream adds to the complexity of equipment implementation and increases the cost of performance but needs to be adopted for implementation of a particular application, for example, to enable the media stream to traverse a particular network address translation (NAT) device. In addition, the transmission of media streams is possibly accompanied by the transmission of highly coupled control streams. For example, an RTP stream is possibly transmitted along with a Real-Time Control Protocol (RTCP) stream and therefore the RTP stream and the RTCP stream may need to be interleaved as a compound media stream and then embedded in a control stream for transmission.

Under the existing architecture where the MGC and MG are separated, a user controls media streams on an MG via the MGC. If a media stream between the user and the MG needs to be transmitted via a control channel, the media stream needs to be embedded in a control stream between the MGC and the MG The existing (media) gateway control protocol, however, does not provide appropriate support to enable the transmission of a media stream embedded in a control stream.

"Gateway control protocol: Advanced media server packages; H.248.9 (2005) Amendment 1 (08/08)" ITU-T STANDARD. INTERNATIONAL TELECOMMUNICATION UNION GENEVA: CH. no. H. 248.9 (2005) mentions an automatic speech recognition package which provide a signal to play an ASR and an event to indicate failure of the play request. According to section 12.2.2.2.1 of the standard "an octet string was generated by the ASR signal".

### Summary of the Invention

The purpose of embodiments of the present invention is to provide a method and device for transmission of a Real-time Transport Protocol, RTP, media stream embedded in a control stream according to the appended claims so as to realize the transmission of said media stream embedded in a control stream between an MGC and an MG.

### Brief Description of the Drawings

FIG. 1 is a flowchart of a method for transmission of a media stream embedded in a control stream in an embodiment of the present invention;
FIG. 2 is a flowchart of a method for transmission of a media stream embedded in a control stream in an embodiment of the present invention;
FIG. 3 is a flowchart of a method for transmission of a media stream embedded in a control stream in another embodiment of the present invention;
FIG. 4 is a flowchart of a method for transmission of a media stream embedded in a control stream in still another embodiment of the present invention;
FIG. 5 is a flowchart of a method for transmission of a media stream embedded in a control stream in still another embodiment of the present invention; and
FIG 6 is a flowchart of a method for transmission of a media stream embedded in a control stream in a preferred embodiment of the present invention.

### Detailed Description of the Invention

### First Embodiment

In the embodiment of the present invention, the (media) gateway control protocol (including but not limited to H.248 and MGCP) between the MG and MGC is extended to realize the transmission of a media stream embedded in a control stream. In particular:

Different indications are adopted for the outgoing data and incoming data of a media stream on an MG so that the MG transmits the media stream data embedded in a control stream in a (media) gateway control protocol stream exchanged between the MG and the MGC according to the indications:

### (1) For outgoing data of the media stream on the MG:

An event in the (media) gateway control protocol is used as an indication indicating that the outgoing data of the media stream on the MG needs to be sent to the MGC instead of being directly sent to a remote end of the media connection. The event may be defined in an existing package or a new package and used in the format of "package ID/event ID". For example, when the event is defined in a new package, the new package is named Media Stream Interleaving (msi) and the event is named Outgoing Data (od) and used in the format of "msi/od".

When the outgoing data event is sent by the MGC to the MG, the event may further include a Channel Number (cn) parameter, indicating the channel number to be used when the media stream data embedded in a control stream for transmission is generated, i.e., when interleaved data is generated. For example, the cn parameter may indicate that channel 0 is used for the RTP stream that is a media stream and channel 1 is used for the RTCP stream that is a control stream when the interleaved data is generated. The cn parameter is a string and its value may be an individual channel number such as 2 or a channel range such as 3 to 5 indicating that an appropriate channel should be selected from the range for generation of the interleaved data.

When the outgoing data event is reported by the MG to the MGC, the event further includes a data block (db) parameter, which carries the interleaved data sent by the MG to the MGC. The db parameter is a string. Its format depends on the type of the data to be transmitted. In the case of RTP packet data, for example, the db parameter is composed in turn of an 8-bit $, an 8-bit channel ID, a 16-bit length of the encapsulated binary data, and the binary data of the length. For other types of data, the db parameter takes on other compositions, which will not impact the implementation of the present invention.

When the outgoing data event is reported by the MG to the MGC, the event may further include a cn parameter, indicating the channel number actually used when the interleaved data is generated. The cn parameter is a string and its value may be an individual channel number or a channel range indicating that a channel is selected from the range for generation of the interleaved data.

### (2) For incoming data of the media stream on the MG:

A signal in the (media) gateway control protocol is used as an indication indicating that the incoming data of the media stream on the MG needs to be received by the MG via the MGC instead of being directly received by a local end of the media connection. The signal may be defined in an existing package or a new package and used in the format of "package ID/signal ID". For example, the signal is defined in the above msi package, named Incoming Data (id), and used in the format of "msi/id".

When the incoming data signal is sent by the MGC to the MG, the signal includes a db parameter carrying the interleaved data sent by the MGC to the MG. The type and format of the db parameter are the same as those of the db parameter in the above outgoing data event.

When the incoming data signal is sent by the MGC to the MG, the signal may further include a cn parameter indicating the channel number to be used to extract the interleaved data. The type of the cn parameter is the same as that of the cn parameter in the above outgoing data event.

In the first embodiment, the above indications are used to respectively control the outgoing data and incoming data of the media stream so that the outgoing data and incoming data of the media stream are respectively embedded in control streams for transmission. The method may control only the outgoing data or incoming data of the media stream so as to embed the media stream data corresponding to the outgoing data or incoming data of the media stream in a control stream for transmission, which will not impact the implementation of the present invention.

### Second Embodiment

In the embodiment, a same indication is adopted for the outgoing data and incoming data of a media stream on an MG so that the MG transmits the media stream data embedded in a control stream in a (media) gateway control protocol stream exchanged between the MG and the MGC:
An event in the (media) gateway control protocol is used as an indication indicating the outgoing data of a media stream on the MG needs to be sent to the MGC. The event is also as indication indicating that the incoming data of a media stream on the MG needs to be received via the MGC. The event may be defined in an existing package or a new package and used in the format of "package ID/event ID". For example, the event is defined in the above msi package, named Embedded Data (ed), and used in the format of "msi/ed".

When the embedded data event is sent from the MGC to the MG, the event may further include a data block (db) parameter, adapted to carry the interleaved data sent from the MGC to the MG, and/or carry an incoming channel number parameter, adapted to indicate the channel number to be used to extract the interleaved data, and/or an outgoing channel number parameter, adapted to indicate the channel number to be used to generate the interleaved data.

When the embedded data event is reported from the MG to the MGC, the event may further include a db parameter adapted to carry the interleaved data from the MG to the MGC, and/or a cn parameter adapted to indicate the channel number actually used to generate the interleaved data.

The event or signal may be specific to a termination or a stream on the termination. When it is specific to a termination, the event or signal is applicable to all streams on the termination. The terminations include the root termination that represents the entirety of the MG and a termination in the MG

The embodiments of the present invention are hereinafter described in detail with reference to the accompanying drawings.

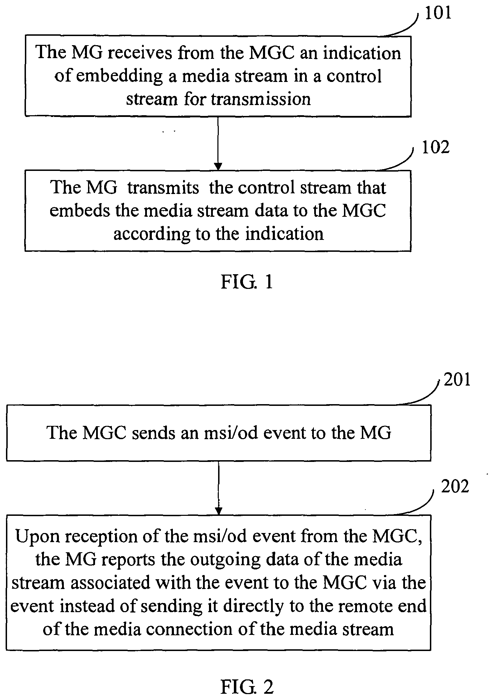

Based on the above two embodiments, as shown in Figure 1, a method for realizing transmission of a media stream embedded in a control stream includes the following steps:
Step 101: The MG receives from the MGC an indication of embedding a media stream in a control stream for transmission.
Step 102: The MG performs transmission of transmits the control stream that embeds the media stream data together with to the MGC according to the indication.

In accordance with the first embodiment, the transmission of a media stream embedded in a control stream is specifically as follows:
Step 201: The MGC sends an outgoing data event (msi/od) to the MG, requesting the MG to initiate embedding the outgoing data of a media stream in a (media) gateway control protocol message sent from the MG to the MGC.

In this step, the outgoing data event sent by the MGC to the MG may further include a channel number parameter (cn) indicating the channel to be used by the MG to generate interleaved data. For example, the msi/od event further includes a cn parameter, the value of which is 1-2, indicating that channel 1 is used for the RTP stream that is a media stream and channel 2 is used for the RTCP stream that is a control stream when the MG generates interleaved data.

Step 202: Upon reception of the msi/od event from the MGC, the MG sends the outgoing data of the media stream associated with the event to the MGC via the event instead of directly sending the data to a remote end of the media connection of the media stream. Thus, the media stream is embedded in a control stream for transmission.

In this step, the MG encodes the outgoing data of the media stream to a data block and carries the data block in the db parameter of the msi/od event and sends the data to the MGC via the event.

In this step, the outgoing data of the media stream may be encoded in different formats according to the media data type. For example, in an embodiment of the present invention, media data is encoded to RTP packet data. In other embodiments of the present invention, media data may be encoded in other formats without impacting the implementation of the present invention.

In practice, the MG may encode the media stream to a data block by using a channel indicated by the cn parameter carried in the msi/od event sent by the MGC. Alternatively, the MG may not use the channel indicated by the MGC to encode the media data, which will not impact the implementation of the present invention. Accordingly, the MG may further notify the MGC of the channel number actually used by the MG to generate the interleaved data via the cn parameter carried in the msi/od event reported to the MGC. For example, the MG may add a cn parameter in the msi/od event reported to the MGC, whose value is 5-6, to notify the MGC that the MG uses channel 5 for the RTP steam that is a media stream and uses channel 6 for the RTCP stream that is a control stream when the MG generates the interleaved data. If the cn parameter takes on the default value, it indicates that the channel numbers used by the MG to generate the interleaved data are the same as those indicated by the MGC.

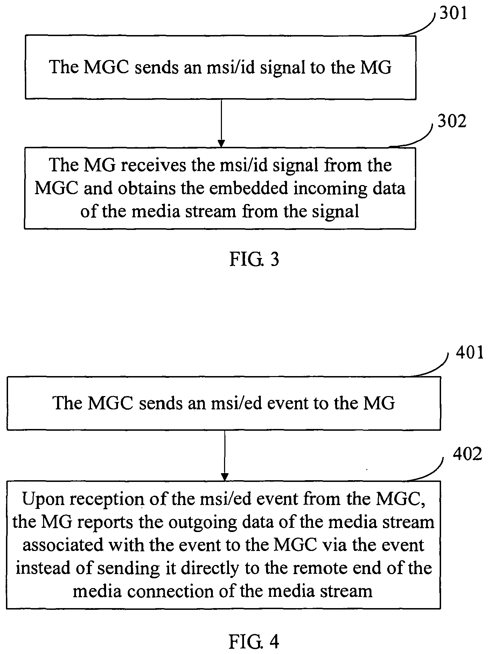

As shown in FIG. 3, the incoming data of a media stream on the MG is embedded in a control stream for transmission in the following steps:
Step 301: The MGC sends an incoming data signal (msi/id) to the MG and the incoming data of the media stream is transmitted to the MG via a db parameter in the signal instead of being received directly by a local end of the media connection of the media stream.
Step 302: The MG receives the msi/id signal from the MGC and obtains the embedded incoming data of the media stream so that the media stream is embedded in a control stream for transmission.

In the above embodiments, the msi/od event and the msi/id signal may be used independently, but generally, if the outgoing data of a media stream is embedded in a control stream for transmission, the incoming data of the media stream is also embedded in a control stream for transmission.

In the embodiments, the MGC may set the msi/od event and/or the msi/id signal specific to a termination or a stream on the termination. If specific to a termination, the event and/or signal is applicable to all streams on the termination. If specific to a stream, the event and/or signal is applicable to the stream. If there are multiple streams on a termination and the setting is specific to only one or some of the streams, when the MGC sends the msi/od event and/or msi/id signal, the event and/or signal needs to carry the ID(s) of the desired stream(s). In addition, the termination may be the root termination that represents the entirety of the MG or a specific termination on the MG, which will not impact the implementation of the present invention.

In accordance with the second embodiment, the transmission of a media stream embedded in a control stream is specifically as follows:
As shown in FIG. 4, the outgoing data of a media stream on the MG is embedded in a control stream for transmission in the following steps:
Step 401: The MGC sends an msi/ed event to the MG, requesting the MG to initiate embedding the outgoing data of a media stream in a (media) gateway control protocol message sent from the MG to the MGC.

Similarly to the first embodiment, in step 401, the msi/ed event sent by the MGC to the MG may further include a cn parameter indicating the channel number to the used by the MG to generate interleaved data.

Before step 401, the embodiment of the present invention further includes:
The MGC judges whether the MG supports transmission of an embedded media stream by auditing whether the MG supports the interleaved package of the media stream. If the MG provides the function, step 401 proceeds or else the procedure is ended.

Step 402: Upon reception of the msi/ed event from the MGC, the MG sends the outgoing data of the media stream associated with event to the MGC via the event instead of directly sending the data to a remote end of the media connection of the media stream. Thus, the media stream is embedded in a control stream for transmission.

In this step, media data may be encoded in different formats according to the type of media data. The MG may encode the media data to a data block by using a channel indicated by the cn parameter carried in the msi/ed event sent by the MGC. Alternatively, the MG may not use the channel indicated by the MGC to encode the media data, which will not impact the implementation of the present invention. Accordingly, the MG may notify the MGC of the channel number actually used by the MG to generate the interleaved data via a cn parameter carried in the msi/ed event reported to the MGC.

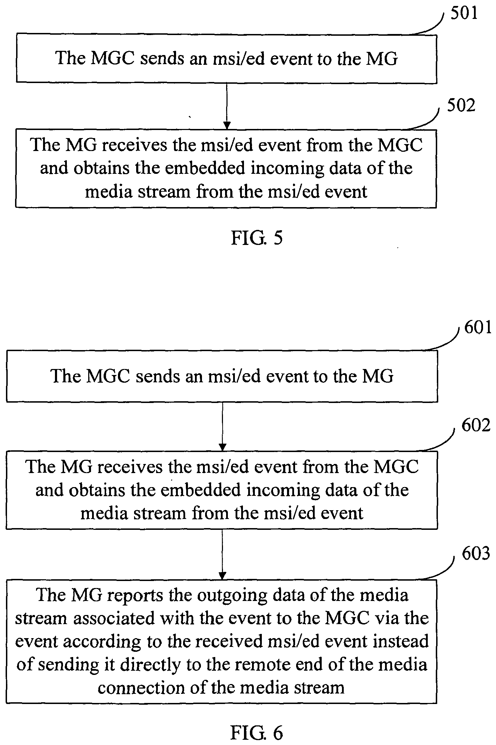

As shown in FIG. 5, the incoming data of a media stream on the MG is embedded in a control stream for transmission in the following steps:
Step 501: The MGC sends an msi/ed event to the MG and the incoming data of the media stream is transmitted to the MG via a db parameter in the event instead of being received directly by a local end of the media connection of the media stream.
Step 502: The MG receives the msi/ed event from the MGC and obtains the embedded incoming data of the media stream so that the media stream is embedded in a control stream for transmission.

In the embodiment, the MGC may set the msi/ed event specific to a termination or a stream on the termination. If specific to a termination, the event is applicable to all streams on the termination. If specific to a stream, the event is applicable to the stream. If there are multiple streams on a termination and the setting is specific to only one or some of the streams, when the MGC sends the msi/ed event, the event needs to carry the ID(s) of the desired stream(s) so as to facilitate the setting of the stream(s) corresponding to the ID(s).

In practice, in accordance with the method provided in the second embodiment, a preferred procedure shown in FIG 6 may be adopted to implement the transmission of a media stream embedded in a control stream. The procedure includes the following steps:
Step 601: The MGC sends an msi/ed event to the MG and the incoming data of the media stream is transmitted to the MG via a db parameter in the event instead of being directly received by a local end of the media connection. Via the msi/ed event, the MGC also requests the MG to initiate embedding the outgoing data of the media stream in a (media) gateway control protocol message sent by the MG to the MGC.
Step 602: The MG receives the msi/ed event from the MGC and obtains the embedded incoming data of the media stream from the msi/ed event.
Step 603: According to the received msi/ed event, the MG sends the outgoing data of the media stream associated with the event to the MGC via the event instead of directly sending the data to a remote end of the media connection of the media stream. Thus, the media stream is embedded in a control stream for transmission.

In the preferred embodiment, the MGC sends an indication specific to both the outgoing data and incoming data of the media stream to the MG via the msi/ed event sent by the MGC to the MG in step 601 and the MG transmits the media stream embedded in a control stream according to the indication.

According to the methods provided in the above embodiments of the present invention, an MGC for transmission of a media stream embedded in a control stream is provided in an embodiment of the present invention. The MGC includes:
an indication sending unit, adapted to send to an MG an indication of embedding a media stream in a control stream for transmission; and
a transmission processing unit, adapted to perform transmission of transmit the control stream that embeds the media stream data together with to the MG.

When the indication is an event of outgoing data and/or incoming data, the transmission processing unit further includes:
an event processing module, when the indication is an event indicating that the outgoing media data of the MG needs to be sent to the MGC, adapted to extract the outgoing media data from the event received from the MG; and/or, when the indication is an event indicating that the incoming media data of the MG needs to be sent to the MG via the MGC, adapted to embed the incoming media data in the event sent by the MGC and send the event to the MG.

When the indication is a signal of the incoming data, the transmission processing unit further includes:
a signal processing module, when the indication is a signal indicating that the incoming media data of the MG needs to be sent to the MG via the MGC, adapted to embed the incoming media data in the signal and send the signal to the MG.

According to the methods provided in the above embodiments of the present invention, an MG for transmission of a media stream embedded in a control stream is provided in an embodiment of the present invention. The MG includes:
an indication receiving unit, adapted to receive from an MGC an indication of embedding a media stream in a control stream for transmission;
a transmission processing unit, adapted to perform transmission of transmit the control stream that embeds the media stream data together with to the MGC according to the indication.

When the indication is an event of outgoing data and/or incoming data, the transmission processing unit further includes:
an event processing module, when the indication is an event indicating that the outgoing media data of the MG needs to be sent to the MGC, adapted to embed the outgoing media data in the event reported by the MG and send the event to the MGC; and/or, when the indication is an event indicating that the incoming media data of the MG needs to be sent to the MG via the MGC, adapted to extract the incoming media data from the event sent by the MGC.

When the indication is a signal of the incoming data, the transmission processing unit further includes:
a signal processing module, when the indication is a signal indicating that the incoming media data of the MG needs to be sent to the MG via the MGC, adapted to extract the incoming media data from the signal.

According to the methods provided in the above embodiments of the present invention, a system for transmission of a media stream embedded in a control stream is provided in an embodiment of the present invention. The system includes an MGC and an MG.

The MGC is adapted to: send to the MG an indication of embedding a media stream in a control stream for transmission and perform transmission of transmit the control stream that embeds the media stream data together with to the MG.

The MG is adapted to: receive from the MGC the indication of embedding a media stream in a control stream for transmission and perform transmission of transmit the control stream that embeds the media stream data together with to the MGC.

Although the technical solution of the present invention has been described through exemplary embodiments, the invention is not limited to such embodiments. It is apparent that those skilled in the art can make various modifications and variations to the invention without departing from the scope of the present invention. The invention is intended to cover the modifications and variations provided that they fall within the scope of protection defined by the claims or their equivalents.

## Claims

1. A method for transmission of a media stream embedded in a control stream based on H.248, wherein the media stream is a Real-time Transport Protocol, RTP, stream, comprising:
receiving (101), by a media gateway, MG, from a media gateway controller, MGC, an indication of embedding the media stream in a control stream for transmission; wherein the indication is a signal or event for incoming data of the media stream, and the signal or event indicates that the incoming data of the MG needs to be sent to the MG via the MGC; wherein the signal and the event are descriptors included by commands between the MGC and the MG; and
performing (102), by the MG, transmission of the control stream that embeds media stream data via the MGC according to the indication;
wherein the step of performing transmission of the control stream that embeds media stream data via the MGC according to the indication comprises: obtaining, by the MG, the incoming data of the media stream from the signal or event sent by the MGC.

2. The method of claim 1, wherein the signal or event comprises a channel number parameter, adapted to indicate a channel number to be used when the MG decodes the incoming data.

3. The method of claim 1 or 2, wherein the signal or event further comprises a data block parameter adapted to carry outgoing data and the step of obtaining the incoming data of the media stream from the signal or event comprises: decoding, by the MG, the incoming data of the media stream from the data block parameter.

4. A media gateway, MG, for transmission of a media stream embedded in a control stream based on H.248, wherein the media stream is a Real-time Transport Protocol, RTP, stream, comprising:
an indication receiving unit, adapted to receive (101) from a media gateway controller, MGC, an indication of embedding the media stream in a control stream for transmission; and
a transmission processing unit, adapted to performing transmission (102) of the control stream that embeds media stream data via the MGC according to the indication; wherein the transmission processing unit further comprises: an event processing module, wherein an event is a descriptor included by a command between the MGC and the MG;
wherein
the event processing module is adapted to extract incoming media data from the event sent by the MGC when the indication is the event indicating that incoming media data of the MG needs to be sent to the MG via the MGC,.

## Patentansprüche

1. Verfahren zur Übertragung eines in einen Steuerstrom eingebetteten Medienstroms basierend auf H.248, wobei der Medienstrom ein Echtzeit-Transportprotokoll (RTP)-Strom ist, umfassend:
Empfangen (101) einer Angabe des Einbettens des Medienstroms in einen Steuerstrom zur Übertragung durch ein Medien-Gateway (MG) von einer Medien-Gateway-Steuerung (MGC); wobei die Angabe ein Signal oder ein Ereignis für eingehende Daten des Medienstroms ist und das Signal oder Ereignis angibt, dass die eingehenden Daten des MG über die MGC zum MG gesendet werden müssen, wobei das Signal und das Ereignis durch Befehle zwischen der MGC und dem MG umfasste Deskriptoren sind; und
Durchführen (102) der Übertragung des Steuerstroms, der Medienstromdaten einbettet, durch den MG über die MGC entsprechend der Angabe;
wobei der Schritt des Durchführens der Übertragung des Steuerstroms, der Medienstromdaten einbettet, über die MGC entsprechend der Angabe umfasst: Erhalten der eingehenden Daten des Medienstroms durch das MG von dem durch die MGC gesendeten Signal oder Ereignis.

2. Verfahren nach Anspruch 1, wobei das Signal oder Ereignis einen Kanalnummer-Parameter umfasst, eingerichtet zum Angeben einer zu verwendenden Kanalnummer, wenn das MG die eingehenden Daten decodiert.

3. Verfahren nach Anspruch 1 oder 2, wobei das Signal oder Ereignis ferner einen Datenblock-Parameter umfasst, eingerichtet zum Führen ausgehender Daten, und der Schritt des Erhaltens der eingehenden Daten des Medienstroms vom Signal oder Ereignis umfasst: Decodieren der eingehenden Daten des Medienstroms aus dem Datenblock-Parameter durch das MG.

4. Medien-Gateway (MG) zur Übertragung eines in einen Steuerstrom eingebetteten Medienstroms basierend auf H.248, wobei der Medienstrom ein Echtzeit-Transportprotokoll (RTP)-Strom ist, umfassend:
eine Angabeempfangseinheit, eingerichtet zum Empfangen (101) einer Angabe des Einbettens des Medienstroms in einen Steuerstrom zur Übertragung von einer Medien-Gateway-Steuerung (MGC); und
eine Übertragungsverarbeitungseinheit, eingerichtet zum Durchführen der Übertragung (102) des Steuerstroms, der Medienstromdaten einbettet, über die MGC entsprechend der Angabe; wobei die Übertragungsverarbeitungseinheit ferner umfasst: ein Ereignisverarbeitungsmodul, wobei ein Ereignis ein durch einen Befehl zwischen der MGC und dem MG umfasster Deskriptor ist;
wobei
das Ereignisverarbeitungsmodul eingerichtet ist zum Extrahieren eingehender Mediendaten aus dem durch die MGC gesendeten Ereignis, wenn die Angabe das Ereignis ist, das angibt, dass eingehende Mediendaten des MG über die MGC zum MG gesendet werden müssen.

## Revendications

1. Procédé de transmission d'un flux multimédia incorporé dans un flux de contrôle basé sur H.248, dans lequel le flux multimédia est un flux de protocole de transport en temps réel, RTP (Real-time Transport Protocol), comprenant :
la réception (101), par une passerelle multimédia, MG (media gateway), à partir d'un dispositif de contrôle de passerelle multimédia, MGC (media gateway controller), d'une indication de l'incorporation du flux multimédia dans un flux de contrôle pour la transmission ; dans lequel l'indication est un signal ou un événement pour les données entrantes du flux multimédia, et le signal ou l'événement indique que les données entrantes de la passerelle MG doivent être envoyées à la passerelle MG par l'intermédiaire du dispositif de contrôle MGC ; dans lequel le signal et l'événement sont des descripteurs inclus par des commandes entre le dispositif de contrôle MGC et la passerelle MG ; et
l'exécution (102), par la passerelle MG, de la transmission du flux de contrôle qui incorpore des données de flux multimédia par l'intermédiaire du dispositif de contrôle MGC conformément à l'indication ;
dans lequel l'étape d'exécution de la transmission du flux de contrôle qui incorpore des données de flux multimédia par l'intermédiaire du dispositif de contrôle MGC conformément à l'indication, comprend : l'obtention, par la passerelle MG, des données entrantes du flux multimédia provenant du signal ou de l'événement envoyé par le dispositif de contrôle MGC.

2. Procédé selon la revendication 1, dans lequel le signal ou l'événement comprend un paramètre de numéro de canal, destiné à indiquer un numéro de canal à utiliser lorsque la passerelle MG décode les données entrantes.

3. Procédé selon la revendication 1 ou 2, dans lequel le signal ou l'événement comprend en outre un paramètre du bloc de données destiné à transporter des données sortantes et l'étape consistant à obtenir les données entrantes du flux multimédia provenant du signal ou de l'événement comprend : le décodage, par la passerelle MG, des données entrantes du flux multimédia provenant du paramètre du bloc de données.

4. Passerelle multimédia, MG, pour la transmission d'un flux multimédia incorporé dans un flux de contrôle basé sur H.248, dans lequel le flux multimédia est un flux de protocole de transport en temps réel, RTP, comprenant :
une unité de réception d'indication, destinée à recevoir (101), à partir d'un dispositif de contrôle de passerelle multimédia, MGC, une indication de l'incorporation du flux multimédia dans un flux de contrôle pour la transmission ; et
une unité de traitement de la transmission, destinée à effectuer la transmission (102) du flux de contrôle qui incorpore des données de flux multimédia par l'intermédiaire du dispositif de contrôle MGC conformément à l'indication ;
dans lequel l'unité de traitement de la transmission comprend en outre : un module de traitement d'événement, dans lequel un événement est un descripteur inclus par une commande entre le dispositif de contrôle MGC et la passerelle MG ;
dans lequel
le module de traitement d'événement est destiné à extraire les données multimédias entrantes de l'événement envoyé par le dispositif de contrôle MGC lorsque l'indication est l'événement indiquant que les données multimédias entrantes de la passerelle MG doivent être envoyées à la passerelle MG par l'intermédiaire du dispositif de contrôle MGC.
